# EUROPÄISCHE PATENTSCHRIFT

(11) **EP 2 163 410 B1**
(45) Veröffentlichungstag und Bekanntmachung des Hinweises auf die Patenterteilung: **25.04.2012**
(21) Anmeldenummer: 09170151.6
(22) Anmeldetag: 14.09.2009
(51) Int. Cl.: B60D 1/54

(54) **Anhängekupplung für Kraftfahrzeuge**
Towbar for motor vehicles
Attelage pour véhicules automobiles

(30) Priorität: 16.09.2008 DE 102008047547
(43) Veröffentlichungstag der Anmeldung: 17.03.2010
(73) Patentinhaber: WESTFALIA - Automotive GmbH, 33378 Rheda-Wiedenbrück (DE)
(72) Erfinder: Benda, Thomas, Dr., 37574, Einbeck (DE); Domke, Friedrich, 33442, Herzebrock-Clarholz (DE); Drücker, Michael, 33332, Gütersloh (DE); Hermbusch, Gerhard, 33449, Langenberg (DE); Peitz, Jürgen, 33378, Rheda-Wiedenbrück (DE); Wyrwich, Martin, 33378, Rheda-Wiedenbrück (DE)
(74) Vertreter: Kohlmann, Kai

(56) Entgegenhaltungen:
- EP-A1- 1 504 928
- EP-A1- 1 826 033

## Beschreibung

Die Erfindung betrifft eine Anhängekupplung für Krafftfahrzeuge, umfassend eine fahrzeugfest angeordnete, über eine Bahnsteuerung schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlusskonturen einerseits eines zumindest bereichsweise sphärisch ausgebildeten Kugelstangenlagerkopfes und andererseits eines diesem sphärischem Bereich gegenüberliegenden sphärisch gewölbten Anbauteiles drehfest festlegbar ist, wobei der Kugelstangenlagerkopf auf einem Taumellager mit einer Bahnsteuerung des Kugelstangenlagerkopfes angeordnet ist, das beim Schwenken der Kugelstange von der einen in die andere Endlage Bewegungen um eine sich im Raum verändernde Schwenkachse bewirkt.

Aus der EP 1 533 149 A1 ist eine gattungsgemäße Anhängekupplung bekannt, die beim Verschwenken der Kugelstange variable Schwenkbewegungen erlaubt, insbesondere um die Kugelstange mit geringst möglichem Bewegungsraum in eine nicht sichtbare Ruhelage verschwenken zu können. Der Kugelstangenlagerkopf ist auf einem Taumellager mit einer Bahnsteuerung des Kugelstangenlagerkopfes angeordnet, wobei das Taumellager beim Schwenken der Kugelstange von der einen in die andere Endlage Bewegungen um eine sich im Raum verändernde Schwenkachse bewirkt. Hierdurch wird erreicht, dass die Schwenkbewegungen nicht mehr von einer einzigen, schräg im Raum verlaufenden Drehachse abhängig sind. Nach dem axialen Abrücken der Kugelstange, wozu nur ein geringer axialer Verschiebeweg benötigt wird, um die Formschlusskonturen außer Eingriff zu bringen, kann die Kugelstange mit einer fast linearen Bewegung von Hand oder motorisch in ihre Endlage verschwenkt und dort wieder verriegelt werden. In einer ersten Ausführungsform weist das Taumellager einen Kugelkopf auf, der unter Zwischenschaltung eines Lagerringes in einem halbschalenartigen Gehäuse des Kugelstangenlagerkopfes angeordnet ist. In einer weiteren Ausführungsform der bekannten Anhängekupplung ist der Kugelstangenlagerkopf kugelig ausgebildet und in einem gewölbten Anbauteil angeordnet. Der kugelige Kugelstangenlagerkopf wird dabei von einem sphärisch ausgebildeten Lagerring getragen. In beiden Ausführungsformen wird im Prinzip ein Kugelgelenk realisiert, wobei die an dem Kugelstangenlagerkopf angeordnete Kugelstange nach dem axialen Abrücken von dem Anbauteil, gesteuert durch die Bahnführung, die Schwenkbewegung um eine sich fortlaufend im Raum verändernde Schwenkachse vollführt.

Ausgehend von diesem Stand der Technik liegt der Erfindung die Aufgabe zu Grunde, eine gattungsgemäße Anhängekupplung zu schaffen, die eine weitere Verbesserung der Schwenkbewegung auch unter ungünstigen Platzverhältnissen ermöglicht.

Diese Aufgabe wird erfindungsgemäß dadurch gelöst, dass das Taumellager eine Welle aufweist, auf der der Kugelstangenlagerkopf schwenkbar sowie axial verschieblich gelagert ist und die Welle verschieblich in einer Kulisse des gewölbten Anbauteils geführt ist, wobei die Bahnsteuerung des Kugelstangenlagerkopfes beim Schwenken der Kugelstange von der einen in die andere Endlage die Verschiebung der Welle in der Kulisse bewirkt.

Durch die Verlagerung der Schwenkachse in der Kulisse des gewölbten Anbauteil kann die Kugelstange unter Wahrung der Vorteile der Verschwenkung um eine sich fortlaufend ändernde Schwenkachse beispielsweise eine gegenüber der Ruhelage höhere Betriebslage einnehmen, um eine vorgeschriebene Mindesthöhe der Kupplungskugel in der Betriebslage sicher zu stellen. Je nach Anordnung und Verlauf der Kulisse in dem Anbauteil ist es jedoch auch möglich, eine gegenüber der Betriebslage höhere Ruhelage der Kugelstange im Ruhestellungsraum zu verwirklichen.

Das Anbauteil der Anhängekupplung ist vorzugsweise an einem Querträger des Fahrzeugs befestigt, wobei die Verbindung des Anbauteils zum Querträger über ein an dem Anbauteil angeschweißtes Verbindungsblech oder aber auch durch einen einstückig an dem Anbauteil angeformten Ansatz erfolgen kann. Die einstückige Ausführung des Anbauteils als Gießteil kommt insbesondere bei größeren Stückzahlen der Anhängekupplung in Betracht, während Kleinserien vorzugsweise ein mehrteiliges, geschweißtes Anbauteil aufweisen.

Vorzugsweise ist die sphärisch gewölbte Oberfläche des Anbauteils konkav, während der in den Drehendstellungen an dieser Oberfläche zur Anlage gelangende gewölbte Bereich des Kugelstangenlagerkopfes konvex, insbesondere in Form einer Kalotte, ausgebildet ist. Selbstverständlich ist es jedoch in kinematischer Umkehr möglich, dass die sphärisch gewölbte Oberfläche des Anbauteils konvex und der gewölbte Bereich des Kugelstangenlagerkopfes konkav ausgebildet sind.

Um bei am Fahrzeug verbauter Anhängekupplung einen großen Hub der Kugelstange während der Schwenkbewegung um die sich im Raum verändernde Schwenkachse zu ermöglichen, ist es erfindungsgemäß vorgesehen, dass der Mittelpunkt der sphärisch gewölbten Oberfläche des Anbauteiles außerhalb des von dem Kugelstangenlagerkopf eingenommenen Raums und der Mittelpunkt des sphärisch gewölbten Bereichs des Kugelstangenlagerkopfes außerhalb des von dem Anbauteil eingenommenen Raumes liegt. Durch diese Bedingungen werden hinreichend große Radien der sphärisch gewölbten Oberfläche des Anbauteils und des sphärisch gewölbten Bereichs des Kugelstangenlagerkopfs sichergestellt, die eine ausreichende Verlagerung der Welle in der vorzugsweise senkrecht zur Fahrbahnoberfläche verlaufenden Kulisse zulassen. Vorzugsweise wird der Radius so groß gewählt, dass der Mittelpunkt der sphärisch gewölbten Oberfläche des Anbauteiles und der Mittelpunkt des sphärisch gewölbten Bereichs des Kugelstangenlagerkopfes außerhalb des von der Anhängekupplung eingenommenen Raums liegen.

Um den insbesondere in Form einer Kugelkalotte sphärisch gewölbten Bereich des Kugelstangenlagerkopfes in der sphärisch gewölbten Oberfläche des Anbauteils längs der Kulisse verschieben zu können, ist deren Oberfläche größer als die Kugelkalotte. Die gewölbte Oberfläche des Anbauteils kann beispielsweise als ovale Kugelzone ausgebildet sein, wobei sich die Kulisse beispielsweise als Langloch in Längsrichtung der ovalen Kugelzone erstreckt. Selbstverständlich sind auch andere Kulissenformen und - anordnungen in dem Anbauteil möglich, insbesondere auch gekrümmt ausgebildete Kulissen.

Eine bevorzugte unverlierbare Befestigung der in der Kulisse geführten Welle an dem Anbauteil besteht darin, dass die Welle auf der dem Kugelstangenlagerkopf gegenüberliegenden Rückseite des Anbauteils drehfest mit einem an der Rückseite anliegenden Halteteil verbunden ist.

Die Formschlusskonturen zum Festlegen des Kugelstangenlagerkopfs gegenüber dem Anbauteil umfassen in Vertiefungen, insbesondere Kalotten, eingreifende Auswölbungen, insbesondere Kugelflächen.

Um ein drehfestes Festlegen sowohl in der Arbeitslage als auch der Ruhelage zu ermöglichen, sind auf zwei versetzt zueinander angeordneten Kreislinien für die Arbeitslage und die Ruhelage jeweils der Zahl der Auswölbungen entsprechend Vertiefungen angeordnet. In der Arbeitslage der Kugelstange greifen die Kugelflächen z.B. in die Vertiefungen auf einer oberen Kreislinie und in der Ruhelage z.B. in die Vertiefungen auf einer unteren Kreislinie formschlüssig ein. Alternativ liegen sämtliche Vertiefungen auf einer einzigen ringförmigen Linie sowohl für die Arbeitslage (A) als auch die Ruhelage (R), wobei die Zahl der Vertiefungen um mindestens eins größer als die Zahl der Auswölbungen ist, in der Arbeitslage (A) eine erste Vertiefung und in der Ruhelage (R) eine zweite Vertiefung ungenutzt bleiben und die erste und zweite Vertiefung sich an unterschiedlichen Positionen der ringförmigen Linie befinden.

Um Beschädigungen der Bedienorgane für die drehfeste Festlegung des Kugelstangenlagerkopfes gegenüber dem Anbauteil zu vermeiden, wirkt das Halteteil mit an dem Anbauteil angeordneten, eine Drehung der Welle um ihre Längsachse unterbindenden Führungsmitteln zusammen. Die Führungsmittel führen das Halteelement insbesondere formschlüssig längs mindestens einer dem Verlauf der Kulisse folgenden Führungsbahn.

Nach einer bevorzugten Ausführung der Erfindung ist die Welle als Hohlwelle ausgebildet, die zentral integriert mit einer axial wirkenden Verriegelung des Kugelstangenlagerkopfes zum in Eingriff bringen der Formschlusskonturen sowohl in der Betriebslage als auch in der Ruhelage der Kugelstange ist. Durch diese Maßnahme lässt sich ein in sich geschlossenes, weitgehend wartungsfreies System erreichen. Die axial wirkende Verriegelung ermöglicht zudem eine selbsttätige axiale Zwangsverschiebung der an dem Kugelstangenlagerkopf angeordneten Kugelstange, sobald die Sperrung in einer der beiden Drehendlagen aufgehoben wird.

In einer vorteilhaften Ausführungsform umfasst die Verriegelung einen in der Hohlwelle geführten, gegen ein anstehendes Kraftelement über ein von außen betätigbares Druck- oder Zugmittel zurückstellbaren Sperrbolzen und mit diesem zusammenwirkende, in Radialbohrung der Hohlwelle angeordnete, ein- und ausrückbare Rastmittel. In der Verriegelungsposition, die durch eine selbsthemmende Schräge zusätzlich gesichert werden kann, drückt der Sperrbolzen die Rastmittel, z. B. Kugeln, Stifte oder dergleichen, in den Radialbohrungen nach außen in einen Lagerring des Kugelstangenlagerkopfes und verhindert damit eine axiale Verstellung der verriegelten Kugelstange. Wenn dann das Kraftelement, z. B. eine Druckfeder, vorgespannt bzw. zusammengezogen wird, beispielsweise mittels eines Handrades oder eines motorischen Antriebs, so dass der Sperrbolzen zurückgezogen wird, fallen die zuvor auseinander gedrückten Rastmittel nach innen. Sie legen sich dann vor eine Stirnfläche des Sperrbolzens und verhindern, dass der Sperrbolzen sich aus seiner zurückgezogenen Lage axial nach vorne bewegen kann. Durch das Zurückziehen des Sperrbolzens kommt die Kugelstange aus ihrer Formschlussverbindung frei und kann nach dem Entriegeln bei gleichzeitiger axialer Verschiebung manuell oder motorbetrieben in die jeweils andere Drehendlage verschwenkt und erneut verriegelt werden, wozu dem Kraftelement die Entspannung ermöglicht wird, so dass der Sperrbolzen vorrücken und die Rastmittel wieder nach außen in ihre Einrastposition drücken kann.

Zum raum- und platzsparenden Verschwenken der Kugelstange in ihre Drehendlagen unter gleichzeitiger Verlagerung der Welle in der Kulisse wird erfindungsgemäß vorgeschlagen, dass die Bahnsteuerung als Nut mit einem in die Nut eingreifenden Folgemittel ausgebildet ist und dem Folgemittel in der Ruhe- und Betriebslage des Kugelstangenlagerkopfes Vertiefungen des Nutgrundes zugeordnet sind, in die die Folgemittel eintauchen. Das insbesondere als Führungsstift ausgebildete Folgemittel hält den Kugelstangenlagerkopf durch die geringere Tiefe der Führungsnut zwischen den beiden endseitigen Vertiefungen während des Verschwenkens auf Distanz zum Anbauteil, die jedoch in den Drehendlagen durch Eintauchen der Führungsstifte in die Vertiefungen aufgehoben wird, um die Formschlusskonturen in Eingriff zu bringen.

Die Nut der Bahnsteuerung ist vorzugsweise in dem sphärisch gewölbten Bereich des Kugelstangenlagerkopfes eingebracht, während das Folgemittel in der sphärisch gewölbten Oberfläche des Anbauteils verankert ist. Die Anordnung von Folgemitteln und Nut kann jedoch auch umgekehrt ausgeführt sein.

Die die Nut begrenzenden Vertiefungen sind auf unterschiedlichen konzentrischen Kreisen um die Welle herum angeordnet. Das Maß der Verlagerung der Welle in der Kulisse des Anbauteils wird durch den Abstand zwischen den konzentrischen Kreisen bestimmt, während die Verlagerungsgeschwindigkeit der Welle in der Kulisse während der Schwenkbewegung durch den Verlauf der Nut gesteuert wird. Nachfolgend wird die Erfindung anhand der Figuren näher erläutert. Es zeigen:
- **Figur 1**: eine perspektivische Darstellung einer erfindungsgemäßen Anhängekupplung, deren Kugelstange sich in Arbeitslage befindet;
- **Figur 2**: eine perspektivische Darstellung einer erfindungsgemäßen Anhängekupplung, deren Kugelstange sich in der Ruhelage befindet;
- **Figur 3**: einen vertikalen Schnitt durch eine erfindungsgemäße Anhängekupplung;
- **Figur 4**: einen vertikalen Schnitt durch die Anhängekupplung nach Figur 3 in axial abgerückter Zwischenstellung des Kugelstangenlagerkopfes während des Schwenkvorgangs;
- **Figur 5**: eine perspektivische Ansicht auf die rückwärtige Seite eines Anbauteils der Anhängekupplung, deren Kugelstange sich in der Ruhelage befindet;
- **Figur 6.1**: eine perspektivische Ansicht auf die Vorderseite des sphärisch gewölbten Anbauteils nach Figur 5;
- **Figur 6.2**: eine perspektivische Ansicht auf die Vorderseite eines sphärisch gewölbten Anbauteils mit abweichender Anordnung der Formschusskonturen;
- **Figur 7.1**: das sphärisch gewölbte Anbauteil nach Figur 6.1 sowie den bereichsweise sphärisch ausgebildeten Kugelstangenlagerkopf (ohne Welle) sowie die Zuordnung von zwischen diesen Bauteilen in Eingriff bringbaren Formschlusskonturen in der Arbeitslage;
- **Figur 7.2**: das sphärisch gewölbte Anbauteil nach Figur 6.2 sowie den bereichsweise sphärisch ausgebildeten Kugelstangenlagerkopf (ohne Welle) sowie die Zuordnung von zwischen diesen Bauteilen in Eingriff bringbaren Formschlusskonturen in der Arbeitslage;
- **Figur 8.1**: das sphärisch gewölbte Anbauteil nach Figur 6.1 sowie den bereichsweise sphärisch ausgebildeten Kugelstangenlagerkopf sowie die Zuordnung von zwischen diesen Bauteilen in Eingriff bringbaren Formschlusskonturen in der Ruhelage;
- **Figur 8.2**: das sphärisch gewölbte Anbauteil nach Figur 6.2 sowie den bereichsweise sphärisch ausgebildeten Kugelstangenlagerkopf sowie die Zuordnung von zwischen diesen Bauteilen in Eingriff bringbaren Formschlusskonturen in der Ruhelage;
- **Figur 9**: eine Aufsicht auf den sphärisch gewölbten Bereich des Kugelstangenlagerkopfes mit einer Bahnführung und der Darstellung eines Führungsstiftes in der Ruhelage der Kugelstange;
- **Figur 10**: eine Aufsicht auf den sphärisch gewölbten Bereich des Kugelstangenlagerkopfes mit einer Bahnführung und der Darstellung des Führungsstiftes in einer Zwischenstellung während der Schwenkbewegung sowie
- **Figur 11**: eine Aufsicht auf den sphärisch gewölbten Bereich des Kugelstangenlagerkopfes mit einer Bahnführung und der Darstellung des Führungsstiftes in der Arbeitslage der Kugelstange.

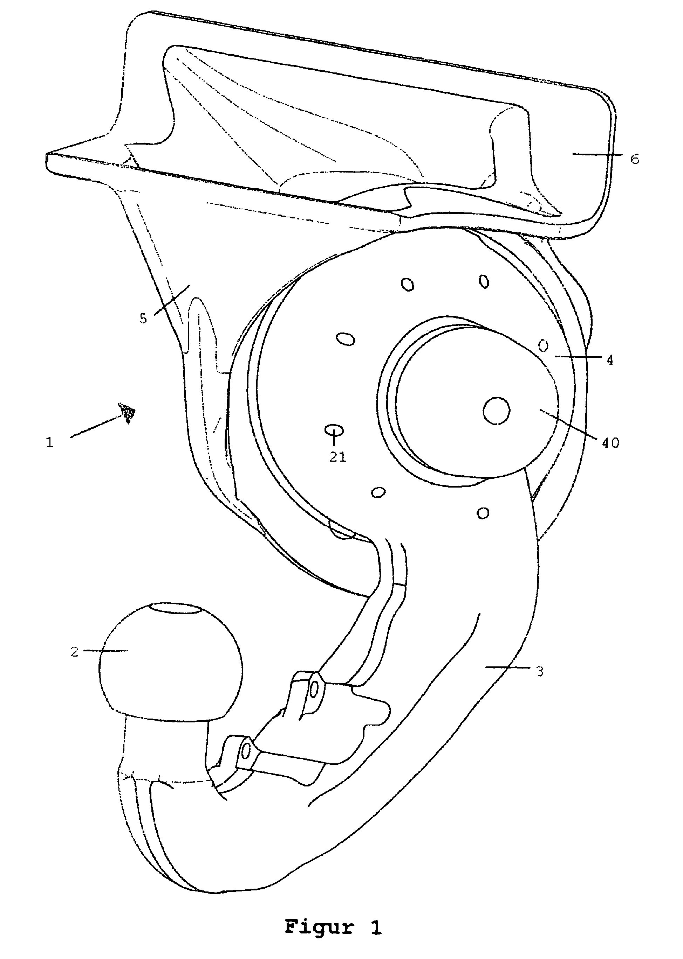

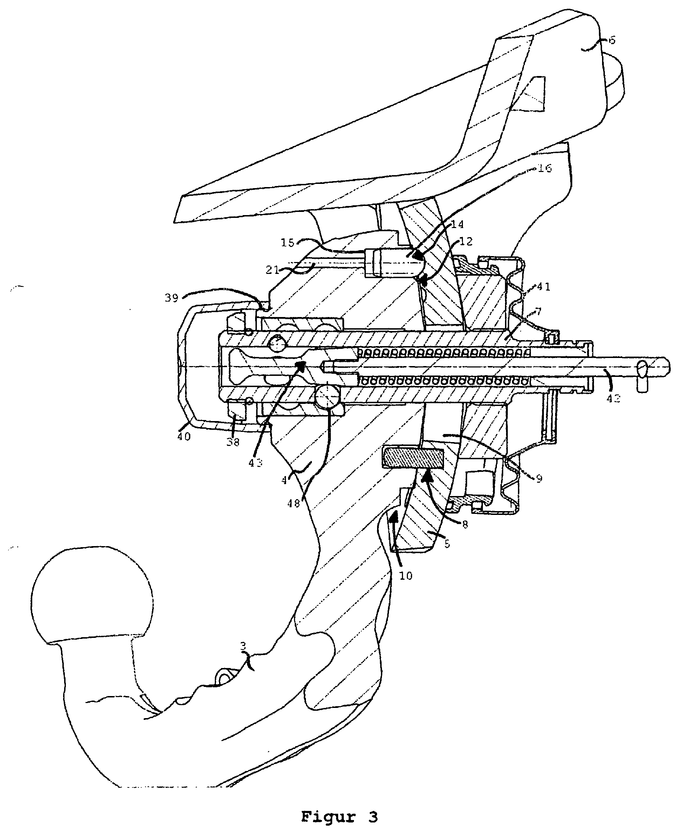

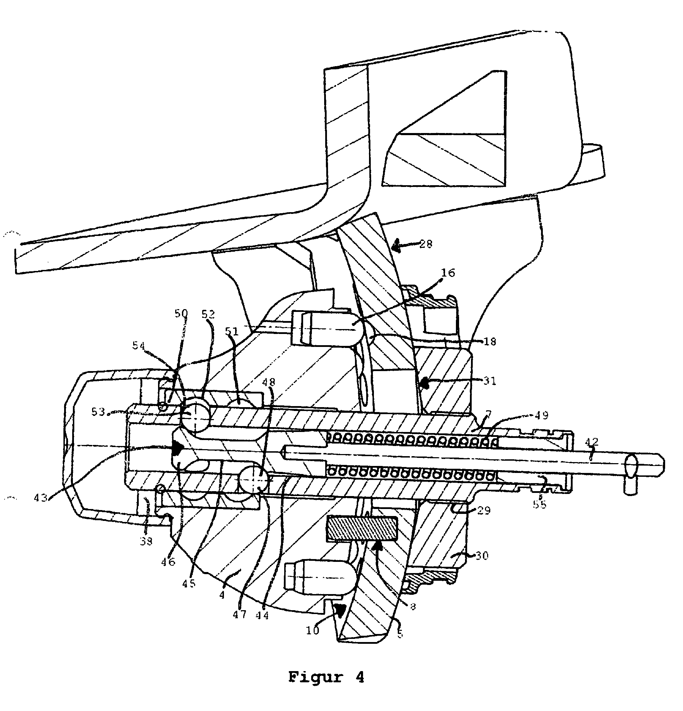

Eine in Figur 1 dargestellte Anhängekupplung (1) ist über einen ein- oder mehrteiligen Querträger an einem nicht dargestellten Fahrzeug befestigt. Die Anhängekupplung (1) umfasst eine gekröpfte, an ihrem freien Ende eine Kupplungskugel (2) tragende Kugelstange (3), die mit ihrem Kugelstangenlagerkopf (4) an einem sphärisch gewölbten Anbauteil (5) angeordnet ist. Das Anbauteil (5) ist mit dem Verbindungsblech (6) einteilig gegossen. Das Verbindungsblech (6) kann jedoch auch als gesondertes Bauteil an dem Anbauteil (5) angeschweißt sein, so wie es in den Schnittdarstellungen der im Übrigen übereinstimmend aufgebauten Anhängekupplung nach den Figuren 3 und 4 dargestellt ist.

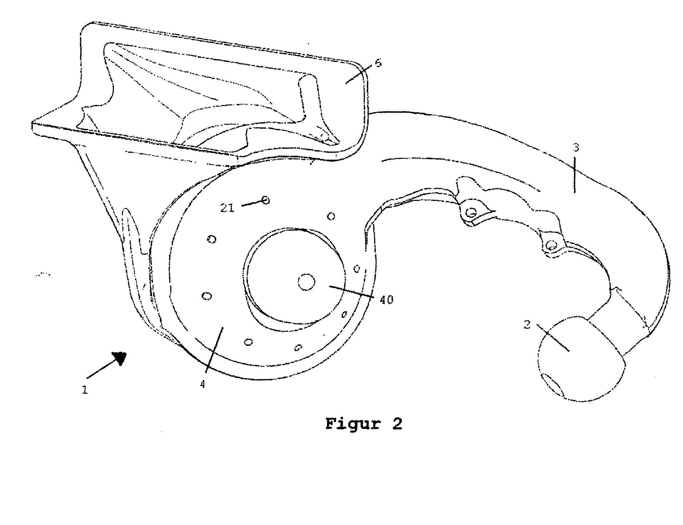

Figur 2 zeigt die Anhängekupplung (1) mit in die Ruhelage verschwenkter Kugelstange (3), die sich in der Ruhelage in einem Ruhestellungsraum zwischen dem hinteren Stoßfänger und der Karosserie des Kraftfahrzeugs befindet. Die Schwenkkinematik der Kugelstange (3) wird vorzugsweise so bestimmt, dass die Kupplungskugel (2) in der Ruhelage den tiefsten Punkt der Kugelstange (3) bildet.

Der Kugelstangenlagerkopf (4) ist, wie aus Figuren 3 und 4 ersichtlich, auf einer Hohlwelle (7) zwischen seinen beiden Drehendlagen (Arbeitslage/Ruhelage) schwenkbar sowie axial verschieblich gelagert, wobei eine Bahnsteuerung (8) beim Verschwenken der Kugelstange (3) von der einen in die andere Drehendlage eine Verschiebung der Hohlwelle (7) in einer als Langloch (9) ausgebildeten Kulisse in dem Anbauteil (5) bewirkt.

Das Anbauteil (5) weist eine insbesondere aus den Figuren 3, 4 und 6 erkennbare, sphärisch gewölbte konkave Oberfläche (10) auf. Der Radius der diese sphärisch gewölbte Oberfläche (10) einschließenden ovalen Kugelzone (11) ist so groß, dass der Mittelpunkt außerhalb des von der gesamten Anhängekupplung (1) eingenommenen Raumes liegt. Der Kugelstangenlagerkopf (4) weist einen entsprechend der Oberfläche (10) sphärisch gewölbten Bereich (12) auf, der insbesondere aus den Figuren 3,4 und 7 erkennbar ist. Der sphärisch gewölbte Bereich (12) hat die Form einer Kugelkalotte (13). Der sphärisch gewölbte Bereich (12) des Kugelstangenlagerkopfes (4) liegt in den Drehendlagen bündig an der sphärischen Oberfläche (10) des Anbauteiles (5) an, so dass Formschlusskonturen (14) den Kugelstangenlagerkopf (4) gegenüber dem Anbauteil (5) drehfest festlegen.

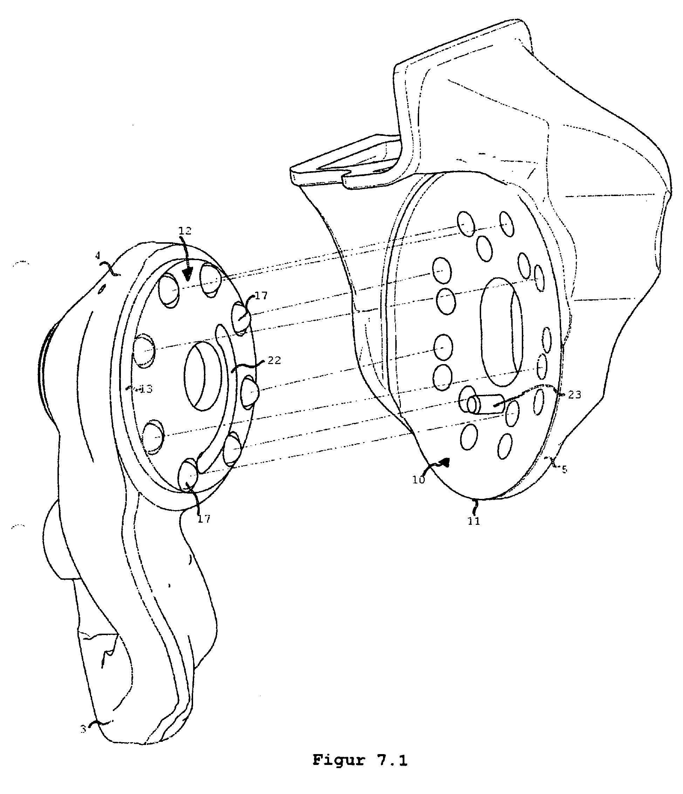

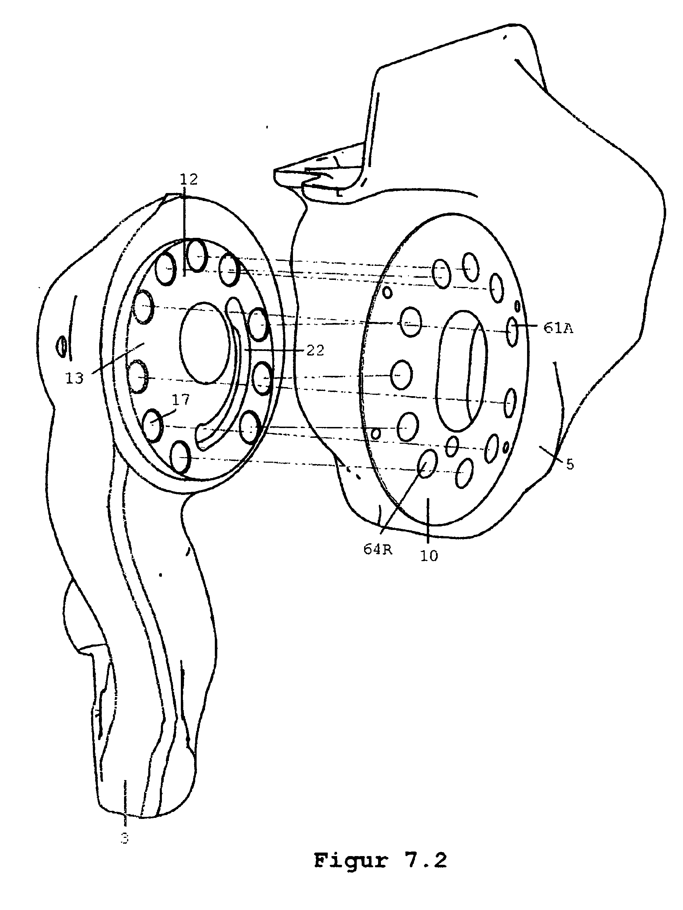

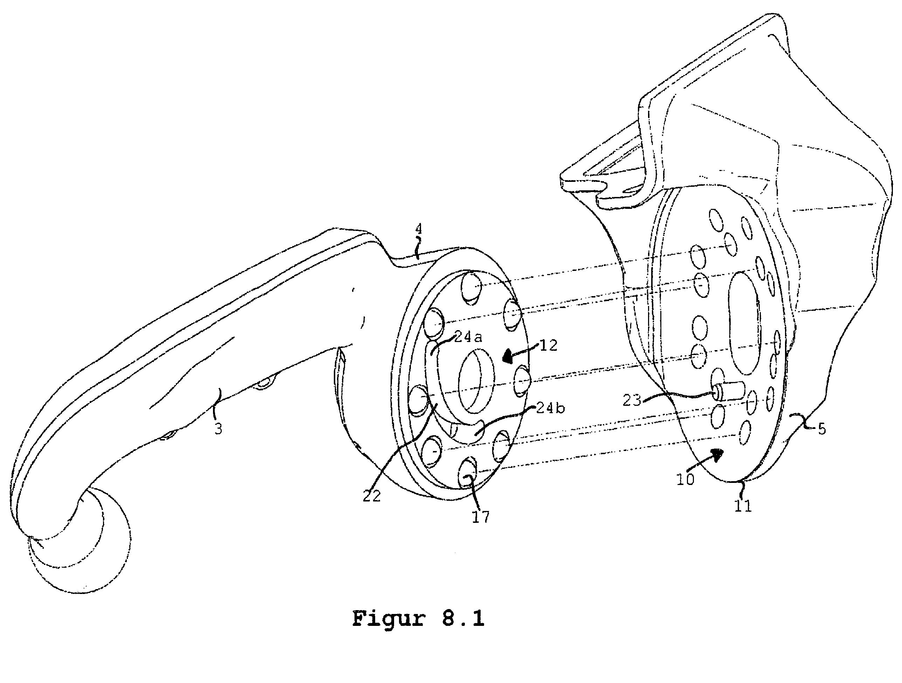

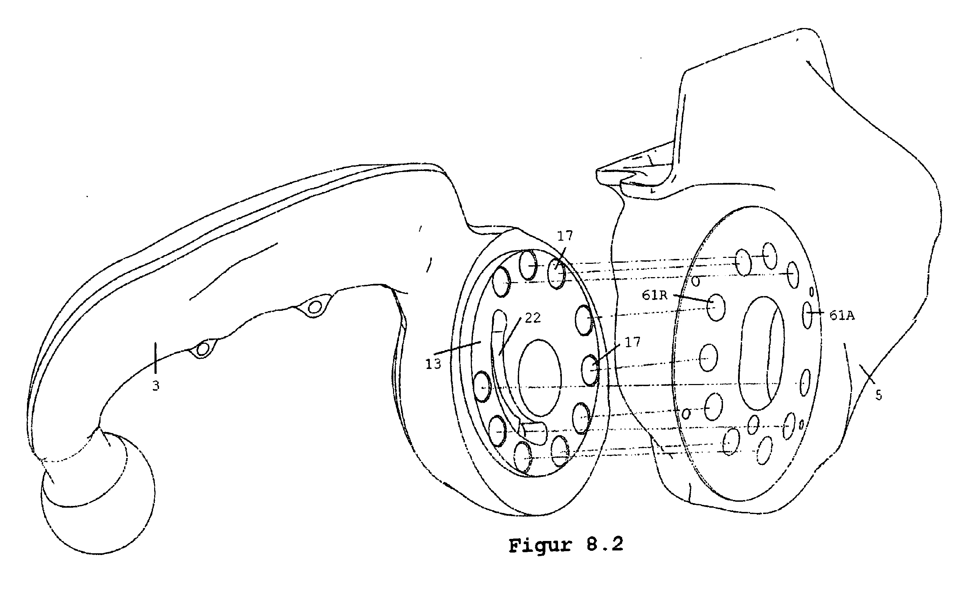

Wie aus Figur 3 in Verbindung mit Figuren 7.1, 7.2 und 8.1, 8.2 erkennbar, umfassen die Formschlusskonturen (14) ringförmig an dem Kugelstangenlagerkopf (4) in Sacklochbohrungen (15) angeordnete Stifte (16) mit stirnseitigen Kugelflächen (17), die über die Oberfläche des sphärischen Bereichs (12) des Kugelstangenlagerkopfes (4) hinaus ragen. Die Stifte (16) werden in die Sacklochbohrungen (15) im Kugelstangenlagerkopf (4) eingepresst. Die Luft entweicht dabei über die in Figur 3 dargestellten Kanäle (21), die, wie in Figuren 1 und 2 erkennbar, an der dem sphärischen Bereich (12) gegenüberliegenden Oberfläche des Kugelstangenlagerkopfes (4) münden. Die Formschlusskonturen können beispielsweise auch als in die sphärische Oberfläche (12) eingelassene Kugeln ausgeführt sein.

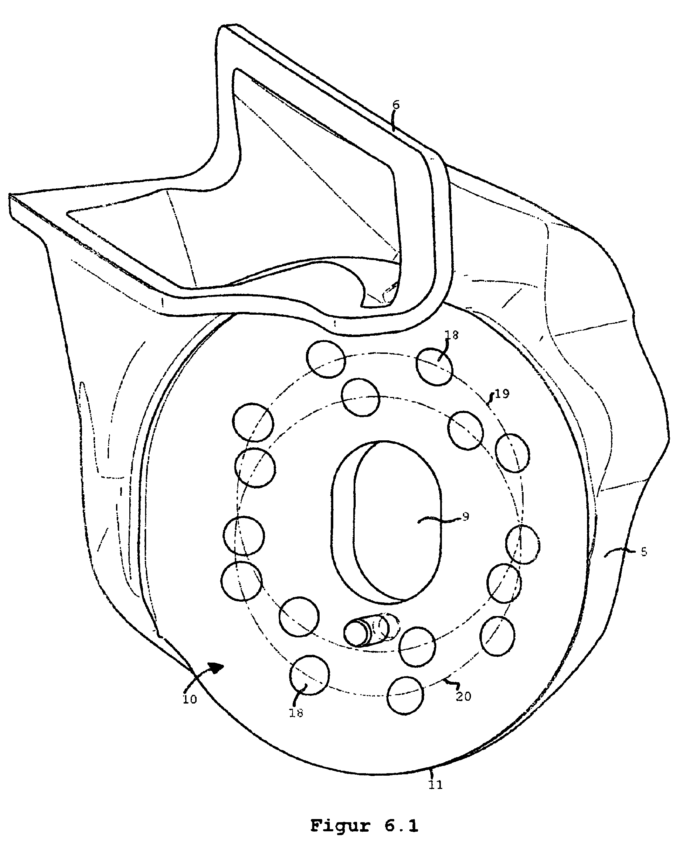

An dem Anbauteil (5) sind auf zwei versetzt zueinander angeordneten Kreislinien (19,20) (Figur 6.1) der Zahl der Stifte (16) entsprechend, jeweils acht kalottenförmige Vertiefungen (18) angeordnet. In der Arbeitslage der Kugelstange (3) greifen die Kugelflächen (17) der Stifte (16) in die Vertiefungen (18) auf der in Figur 6.1 oberen Kreislinie (19) und in der Ruhelage in die Vertiefungen (18) auf der unteren Kreislinie (20) formschlüssig ein.

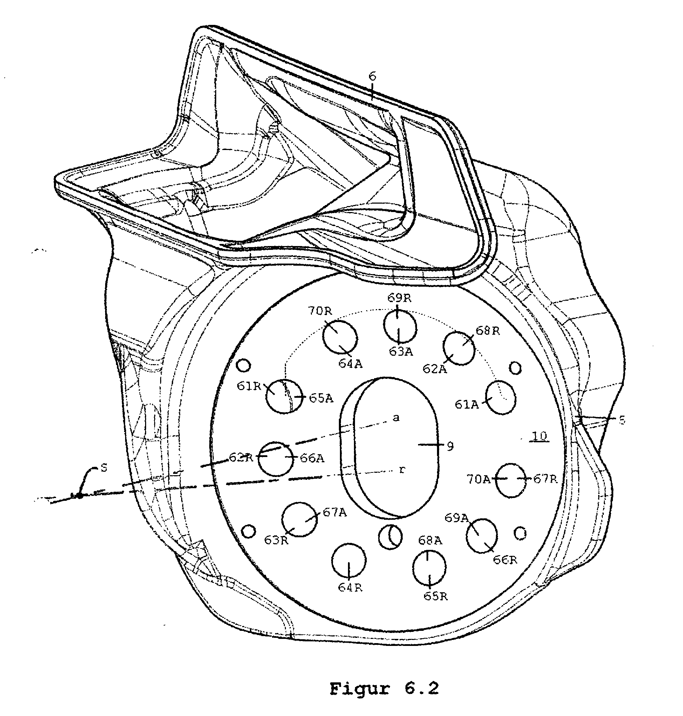

Figur 6.2 zeigt eine andere, bevorzugte Ausgestaltung der Erfindung, bei der die kalottenförmigen Vertiefungen (61 A/R - 70 A/R) zur Aufnahme der Kugelflächen (17) der Stifte (16) auf einer gemeinsamen ringförmigen Linie sowohl für die Arbeitslage (A) als auch die Ruhelage (R) liegen.

In der Arbeitslage (A) greifen die Kugelflächen (17) in die Vertiefungen (61 A - 70 A) (vgl. die Bezugsziffern innerhalb der ringförmigen Linie) ein. In der Ruhelage (R) greifen die Kugelflächen (17) in die Vertiefungen (61 R - 70 R) (vgl. die Bezugsziffern außerhalb der ringförmigen Linie) ein. In der Arbeitslage (A) bleibt die Vertiefung (64 R) und in der Ruhelage (R) die Vertiefung (61 A) ungenutzt.

In der Arbeitslage (A) befindet sich die Schwenkachse des Kugelstangenlagerkopfes (3) in der in Figur 6.2 oberen Position (a) und in der Ruhelage in der unteren Position (r). Beim Schwenken der Kugelstange (3) gegen den Uhrzeigersinn aus der Arbeitslage (A) in die Ruhelage (R) bewegt sich die Schwenkachse des Kugelstangenlagerkopfes (3) aus der oberen Position (a) in die untere Position (r). Dabei dreht der Kugelstangenlagerkopf um die Achse (s), die senkrecht auf der durch die Linien (a) und (r) aufgespannten Ebene steht und durch deren Schnittpunkt verläuft. Der Schnittpunkt ist der Radiusmittelpunkt der konkaven sphärischen Oberfläche (10) des Anbauteils (5). Gleichzeitig dreht die Kugelfläche (17), die in der Arbeitslage (A) in die Vertiefung (61 A) eingegriffen hat, entgegen dem Uhrzeigersinn vier Vertiefungen weiter und greift nunmehr in die Vertiefung (65 A) ein, die in der Ruhelage mit (61 R) bezeichnet wird. In gleicher weise drehen die übrigen Kugelflächen (17) weiter und nehmen entgegen dem Uhrzeigersinn die Positionen an den Vertiefungen (62 R - 70 R) ein, wobei die Vertiefung (61 A) in der Ruhestellung (R) ungenutzt bleibt. Die ungenutzte Vertiefung(64 R) der Arbeitslage (A) liegt ebenfalls um vier Vertiefungen versetzt zur der ungenutzten Vertiefung (61 A) der Ruhestellung (R). Um ein einwandfreies Eingreifen sämtlicher der 10 Kugelflächen (17) sowohl in der Arbeitslage (A) als auch er Ruhelage (R) zu gewährleisten, stimmt die Anordnung der Vertiefungen (62 A - 70 A) in Bezug auf die Vertiefung (61 A) mit der Anordnung der Vertiefungen (62 R - 70 R) in Bezug auf die Vertiefung (61 R) überein.

Die gestrichelten Linien in Figur 7.2 zeigen die genaue Zuordnung der Kugelflächen (17) des Kugelstangenlagerkopfs (4) zu den Vertiefungen (61 A - 70 A) in der Arbeitslage.

Die gestrichelten Linien in Figur 8.2 zeigen die genaue Zuordnung der Kugelflächen (17) des Kugelstangenlagerkopf (4) zu den Vertiefungen (61 R - 70 R) in der Ruhelage.

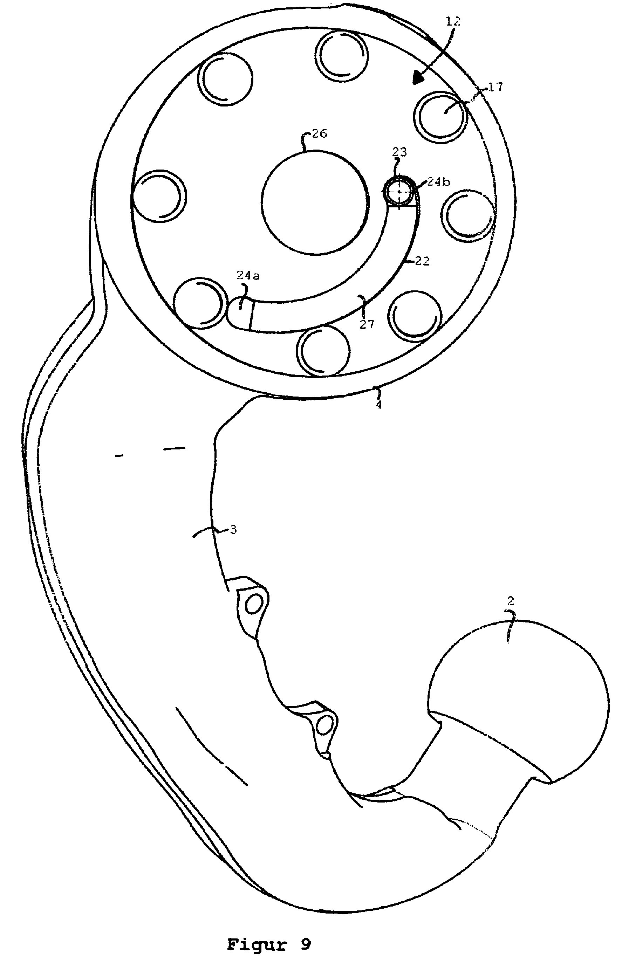

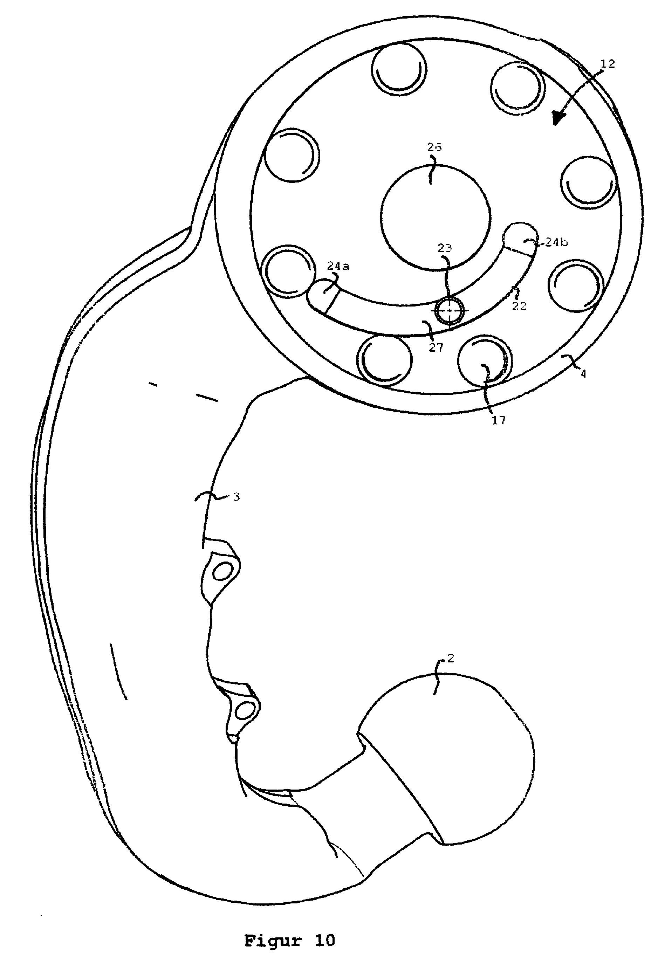

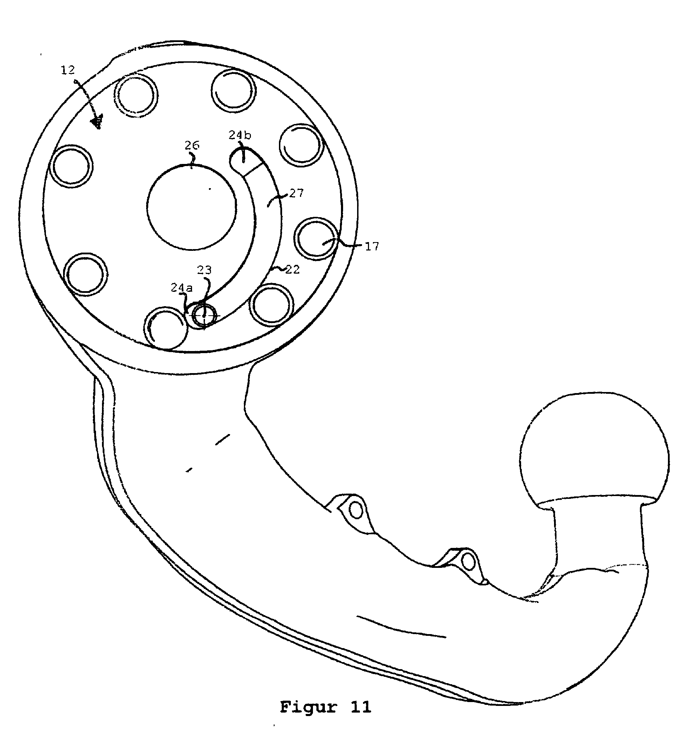

Die in Figuren 3 und 4 insgesamt mit (8) bezeichnete Bahnsteuerung wird, wie insbesondere aus den Figuren 7.1 und 8.1 erkennbar, von einer Nut (22) in dem sphärisch gewölbten Bereich (12) des Kugelstangenlagerkopfes (4) und einem als Führungsstift (23) ausgebildeten Folgemittel gebildet, das in die Nut (22) eingreift. An den stirnseitigen Enden weist die Nut (22) Vertiefungen (24 a, 24 b) des Nutgrundes auf, in die der Führungsstift (23) sowohl in der Ruhe- als auch Betriebslage der Kugelstange (3) so tief eintaucht, dass die Formschlusskonturen (14) zum Eingriff gelangen. In dem zwischen den Vertiefungen (24a, 24 b) liegenden Abschnitt der Nut ist der Nutgrund (27) erhöht, so dass der Kugelstangenlagerkopf (4) durch den auf dem höheren Nutgrund abgleitenden Führungsstift (23) so weit von dem Anbauteil (5) in axialer Richtung der Hohlwelle (7) abgerückt wird, dass die Formschlusskonturen (14) außer Eingriff stehen. Die Bahnsteuerung (8) übernimmt damit nicht nur die Verlagerung der Schwenkachse des Kugelstangenlagerkopfes (4), sondern darüber hinaus das axiale Abrücken des Kugelstangenlagerkopfes (4) von dem Anbauteil (5) während der Schwenkbewegung. Wie insbesondere aus den Figuren 9 bis 11 erkennbar, sind die Vertiefungen (24a, 24b) auf unterschiedlichen konzentrischen Kreisen um den Durchgang (26) zur Aufnahme der Hohlwelle (7) angeordnet. Zwischen den Vertiefungen (24a, 24b) verläuft die Nut (22) gekrümmt. Der Abstand der konzentrischen Kreise um den Durchgang (26) bestimmt das Maß der Verschiebung der Hohlwelle (7) in dem die Kulisse bildenden Langloch (9) in dem Anbauteil (5). In der Ruhelage der Kugelstange (3) taucht der Führungsstift (23) in die Vertiefung (24b) der Nut (22) ein, wie dies in Figur 9 dargestellt ist. Figur 10 zeigt den auf dem höheren Nutgrund (27) abgleitenden Führungsstift (23) während der Schwenkbewegung. Figur 11 zeigt schließlich den in die Vertiefung (24a) eingetauchten Führungsstift (23) nach Erreichen der Arbeitslage der Kugelstange (3).

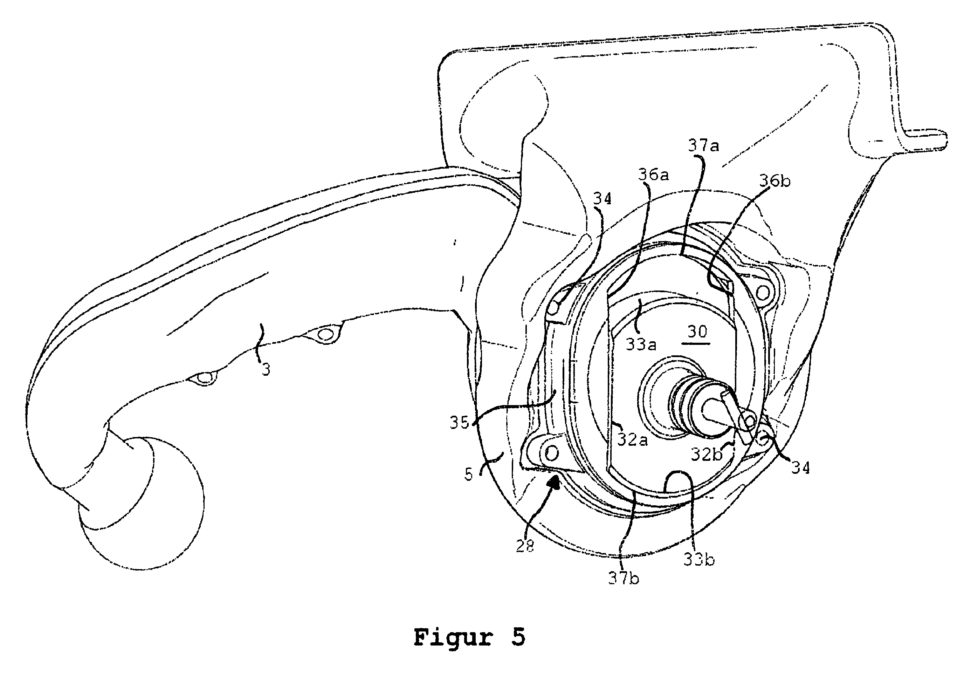

Der Durchmesser der den Kugelstangenlagerkopf (4) schwenkbar sowie axial verschieblich lagernden Hohlwelle (7) entspricht der Breite des Langlochs (9) in dem Anbauteil (5). Auf der dem Kugelstangenlagerkopf (4) gegenüberliegenden Rückseite (28) des Anbauteils (5) ist auf ein Außengewinde (29) der Hohlwelle (7) ein insbesondere aus den Figuren 3 bis 5 erkennbares Halteteil (30) aufgeschraubt. Das Halteteil (30) liegt mit seiner konkav gewölbten Oberfläche (31) an der entsprechend gewölbten konvexen Rückseite (28) des Anbauteils (5) bündig an. Seitlich wird das Halteteil (30) durch zwei parallel zueinander verlaufende äußere Führungsflächen (32 a, 32 b) begrenzt, die stirnseitig in kreisbogenförmige Anschlagflächen (33 a, 33 b) übergehen.

Das Halteteil (30) ist in einem auf der Rückseite (28) mit vier Schraubverbindungen (34) befestigten Führungsgehäuse (35) dem Verlauf des Langlochs (9) folgend geführt. In dem Deckel des Führungsgehäuses (35) befindet sich eine Führungsöffnung, die seitlich durch innere Führungsflächen (36 a, 36 b) sowie stirnseitig durch Anschlagflächen (37 a, b) begrenzt wird. Die äußeren Führungsflächen (32 a, 32 b) des Halteteils (30) gleiten an den inneren Führungsflächen (36 a, 36 b) des Führungsgehäuses (35) während der Verlagerung der Hohlwelle (7) in dem Langloch (9) ab. Bei Erreichen der Ruhelage stößt die Anschlagfläche (33 b) des Halteteils (30) an die Anschlagsfläche (37 b) des Führungsgehäuses (35). Bei Erreichen der Betriebslage stößt die Anschlagfläche (33 a) an die Anschlagsfläche (37 a) des Führungsgehäuses (35). Aufgrund der drehfesten Verbindung des Halteteils (30) mit der Hohlwelle (7) sowie dessen formschlüssigen Eingriffs in die Führungsöffnung des Führungsgehäuses (35) unterbindet das Halteteil (30) zusammen mit dem Führungsgehäuse (35) wirksam eine Drehung der Hohlwelle (7) um ihre Wellenachse. Zugleich sichert das aufgeschraubte Halteteil (30) eine Verschiebung der Hohlwelle (7) in Richtung des Kugelstangenlagerkopfes (4), der auf der gegenüberliegenden Stirnseite der Hohlwelle (7) durch einen Sicherungsring (38) gesichert ist. Der beispielsweise aufgeschraubte oder aufgeklipst Sicherungsring (38) befindet sich in der in Figur 3 dargestellten Betriebslage der Anhängekupplung (1) in einem Abstand von der Stirnseite (39) des Kugelstangenlagerkopfes (4), die lediglich während des Schwenkvorganges an dem Sicherungsring (38) zur Anlage gelangt. Stirnseitig ist an dem Kugelstangenlagerkopf (4) eine die Mündung der Hohlwelle (7) und den Sicherungsring (38) umhüllende Schutzkappe (40) aufgesetzt, die wirksam ein Eindringen von Schmutz in das Innere der Hohlwelle (7) verhindert. Auf der gegenüberliegenden Seite der Hohlwelle (7) schützt ein Faltenbalg (41) gegen den Eintritt von Verschmutzung.

Sowohl in der in Figur 3 dargestellten Betriebslage als auch in ihrer in Figur 2 dargestellten Ruhelage ist die Kugelstange (3) drehfest verriegelt. Zum Entriegeln und damit Freigeben der Schwenkbewegung der Kugelstange (3) ist von der Seite des Anbauteiles (5) her an die Anhängekupplung (1) ein nicht dargestellter Auslösemechanismus an einem Zugmittel (42) angeschlossen, das an seinem in die Hohlwelle (7) eintauchenden Ende mit einem in der Hohlwelle (7) vor- und zurückbewegbaren Sperrbolzen (43) verbunden ist. Der Sperrbolzen (43) weist einen sich leicht konisch verjüngenden, eine selbsthemmende Anlaufschräge ausbildenden konischen Abschnitt (44), einen eingezogenen Bereich (45) sowie ein sich stirnseitig erweiternden Abschnitt (46) auf. Zur Verriegelung des Kugelstangenlagerkopfes in den Drehendlagen sind in Radialbohrungen (47) der Hohlwelle (7) über den Umfang des Sperrbolzens (43) Kugeln (48) als Rastmittel verteilt, die von dem Sperrbolzen (43) unter Einwirkung einer Schraubenfeder (49) nach außen gedrückt werden. Als Widerlager stützt sich die Feder an einer in die Hohlwelle (7) eingesetzten Hülse (55) ab. Die Kugeln (48) werden in eine in einem Lagerring (50) angeordnete Aufnahme (51), ausgebildet beispielsweise als Ringnut oder Rille, bewegt. Der Lagerring (50) ist drehfest in den Kugelstangenlagerkopf (4) eingepresst. Die Aufnahme (51) kann an ihrer in Verriegelungsrichtung weisenden Lauffläche mit einer Anlaufschräge versehen sein, die beim Anziehen der Kugelstange (3) in die in den Drehendlagen verriegelte Position eine gezielt ausgerichtete Kraft zur axialen Verschiebung der Kugelstange (3) bzw. des Kugelstangenlagerkopfes (4) in Verriegelungsrichtung bewirkt. In dem Lagerring (50) befindet sich eine weitere Aufnahme (52) in Form einer Ringnut oder Rille, die mit Hilfe der von dem stirnseitigen Abschnitt (46) des Sperrbolzens (43) nach außen drückbaren Kugeln (53), die ebenfalls in Radialbohrungen (54) der Hohlwelle (7) angeordnet sind, das axiale Abrücken des Kugelstangenlagerkopfes (4) von dem Anbauteil (5) unterstützen (vgl. Figur 4).

Die erfindungsgemäße Anhängekupplung arbeitet wie folgt:

Zur Auslösung und damit Entriegelung einerseits des Sperrbolzens (43) und andererseits der Formschlusskonturen (14) der Formschlussverbindung zwischen Kugelstangenlagerkopf (4) und Anbauteil (5) und damit Freigeben der Kugelstange (3) zum Verschwenken in eine andere Drehendlage, wird der Sperrbolzen (43) durch Betätigung des Auslösemechanismus gegen die Kraft der Schraubenfeder (49), die sich dabei vorspannt, zurück gestellt. Die Kugeln (48) können damit aus der Aufnahme (51) des Lagerrings (50) durch die Radialbohrungen (47) der Hohlwelle (7) nach innen fallen und sich vor den Kopf des konischen Abschnitts (44) des Sperrbolzens (43) legen, wie dies insbesondere in Figur 4 erkennbar ist. Damit einhergehend wird der Kugelstangenlagerkopf (4) axial von dem Anbauteil (5), unterstützt durch die zugleich in die Aufnahme (52) eingreifenden Kugeln (53), axial wegbewegt, so dass die Formschlussverbindung zwischen den endseitig kugeligen Stiften (16) und den kalottenförmigen Vertiefungen (18) aufgehoben wird. Erst nachdem die Kugelstange (3) hand- oder motorbetätigt in die andere Drehendlage verschwenkt und der Sperrbolzen (43) durch die Schraubenfeder (49) beaufschlagt wieder nach vorne in seine Verriegelungsposition bewegt worden ist, werden die Kugeln (48) wieder durch die Radialbohrungen (47) in die Aufnahme (51) des Lagerrings (50) gedrückt. Die Anhängekupplung (1) ist damit wieder verriegelt.

Bei der Schwenkbewegung des Kugelstangenlagerkopfes (4) um die Hohlwelle (7) gleitet der Führungsstift (23) in der Nut (22) von der die Betriebslage definierenden endseitigen Vertiefung (24 a) der Nut (22) zu der die Ruhelage definierenden endseitigen Vertiefung (24 b) bzw. umgekehrt. Im dargestellten Ausführungsbeispiel weist die Vertiefung (24 a) einen größeren Abstand zur Wellenachse der Hohlwelle (7) auf, als die Vertiefung (24 b). Folglich befindet sich der Kugelstangenlagerkopf (4) und damit die Kugelstange (3) bei im wesentlichen senkrechter Anordnung des Langlochs (9) in dem Anbauteil (5) in der Betriebslage in ihrer höchsten Position in dem Langloch (9) (Figur 3), während sie sich in der Ruhelage in ihrer tiefsten Position befindet. Durch unterschiedliche Anordnung der aus den Figuren 9 bis 11 ersichtlichen Vertiefungen (24 a, 24 b) in dem sphärischen Bereich (12) des Kugelstangenlagerkopfes (4) sowie Änderung des Verlaufs der Nut (22) lassen sich in Verbindung mit einer geeigneten Wahl des Krümmungsradius des sphärischen Bereichs (12) des Kugelstangenlagerkopfes (4) und der sphärischen Oberfläche (10) des Anbauteils (5) nahezu beliebige Schwenkgeometrien auch unter beengten Platzverhältnissen erreichen, die den jeweiligen Besonderheiten des Fahrzeugs Rechnung tragen.

### Bezugszeichenliste

| Nr. | Bezeichnung | Nr. | Bezeichnung |
|---|---|---|---|
| 1. | Anhängekupplung | 30. | Halteteil |
| 2. | Kupplungskugel | 31. | konkave Oberfläche |
| 3. | Kugelstange | 32 a, b | äußere Führungsflächen |
| 4. | Kugelstangenlagerkopf | 33 a, | b Anschlagflächen |
| 5. | Anbauteil | 34. | Schraubverbindun gen |
| 6. | Verbindungsblech | 35. | Führungsgehäuse |
| 7. | Hohlwelle | 36 a, b | innere Führungsflächen |
| 8. | Bahnsteuerung | 37 a, | b Anschlagflächen |
| 9. | Langloch (Kulisse) | 38. | Sicherungsring |
| 10. | sphärische Oberfläche | 39. | Stirnseite |
| 11. | Kugelzone | 40. | Schutzkappe |
| 12. | sphärischer Bereich | 41. | Faltenbalg |
| 13. | Kugelkalotte | 42. | Zugmittel |
| 14. | Formschlusskonturen | 43. | Sperrbolzen |
| 15. | Sacklochbohrungen | 44. | konischer Abschnitt |
| 16. | Stifte | 45. | eingezogener Bereich |
| 17. | Kugelfläche | 46. | stirnseitiger Abschnitt |
| 18. | Vertiefungen | 47. | Radialbohrungen |
| 19. | oberer Kreis | 48. | Kugeln (Rastmittel) |
| 20. | unterer Kreis | 49. | Schraubenfeder |
| 21. | Kanäle | 50. | Lagerring |
| 22. | Nut | 51. | Aufnahme |
| 23. | Führungsstifte | 52. | Aufnahme |
| 24 a, b | Vertiefungen | 53. | Kugeln |
| 25. | - | 54. | Radialbohrungen |
| 26. | Durchgang | 55. | Hülse |
| 27. | Nutgrund | 61A - 70A | Vertiefungen Arbeitslage |
| 28. | Rückseite | 61R - 70 R | Vertiefungen Ruhelage |
| 29. | Außengewinde | | |

## Patentansprüche

1. Anhängekupplung für Krafftfahrzeuge, umfassend eine fahrzeugfest angeordnete, über eine Bahnsteuerung schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlusskonturen einerseits eines zumindest bereichsweise sphärisch ausgebildeten Kugelstangenlagerkopfes und andererseits eines diesem sphärischem Bereich gegenüberliegenden sphärisch gewölbten Anbauteiles drehfest festlegbar ist, wobei der Kugelstangenlagerkopf auf einem Taumellager mit einer Bahnsteuerung des Kugelstangenlagerkopfes angeordnet ist, das beim Schwenken der Kugelstange von der einen in die andere Endlage Bewegungen um eine sich im Raum verändernde Schwenkachse bewirkt, **dadurch gekennzeichnet, dass** das Taumellager eine Welle (7) aufweist, auf der der Kugelstangenlagerkopf (4) schwenkbar sowie axial verschieblich gelagert ist und die Welle (7) verschieblich in einer Kulisse (9) des gewölbten Anbauteils (5) geführt ist, wobei die Bahnsteuerung (8) des Kugelstangenlagerkopfes (4) beim Schwenken der Kugelstange (3) von der einen in die andere Endlage die Verschiebung der Welle (7) in der Kulisse (9) bewirkt.

2. Anhängekupplung nach Anspruch 1, **dadurch gekennzeichnet, dass** die sphärische gewölbte Oberfläche (10) des Anbauteils (5) konkav und der in den Drehendstellungen an dieser Oberfläche anliegende sphärische gewölbte Bereich (12) des Kugelstangenlagerkopfes (4) konvex ausgebildet sind.

3. Anhängekupplung nach Anspruch 1, **dadurch gekennzeichnet, dass** die sphärische gewölbte Oberfläche (10) des Anbauteils (5) konvex und der in den Drehendstellungen an dieser Oberfläche anliegende sphärische gewölbte Bereich (12) des Kugelstangenlagerkopfes (4) konkav ausgebildet ist.

4. Anhängekupplung nach einem der Ansprüche 1 bis 3, **dadurch gekennzeichnet, dass** der Mittelpunkt der sphärisch gewölbten Oberfläche (10) des Anbauteiles (5) außerhalb des von dem Kugelstangenlagerkopf (4) eingenommenen Raums und der Mittelpunkt des sphärisch gewölbten Bereichs (12) des Kugelstangenlagerkopfe (4)s außerhalb des von dem Anbauteil (5) eingenommenen Raumes liegen.

5. Anhängekupplung nach Anspruch 4, **dadurch gekennzeichnet, dass** der Mittelpunkt der sphärisch gewölbten Oberfläche (10) des Anbauteiles (5) und der Mittelpunkt des sphärisch gewölbten Bereichs (12) des Kugelstangenlagerkopfes (4) außerhalb des von der Anhängekupplung (1) eingenommen Raums liegt.

6. Anhängekupplung nach einem der Ansprüche 1 bis 5, **dadurch gekennzeichnet, dass** der sphärisch gewölbte Bereich (12) des Kugelstangenlagerkopfes (4) die Form einer Kugelkalotte(13) aufweist.

7. Anhängekupplung nach Anspruch 6, **dadurch gekennzeichnet, dass** die sphärisch gewölbte Oberfläche (10) des Anbauteiles (5) größer als die Kugelkalotte (13) ist.

8. Anhängekupplung nach einem der Ansprüche 1 bis 7, **dadurch gekennzeichnet, dass** die Welle (7)auf der dem Kugelstangenlagerkopf (4) gegenüberliegende Rückseite (28) des Anbauteils (5) drehfest mit einem an der Rückseite anliegenden Halteteil (30) verbunden ist.

9. Anhängekupplung nach Anspruch 8, **dadurch gekennzeichnet, dass** das Halteteil (30) mit an dem Anbauteil (5) angeordneten, eine Drehung der Welle (7) um ihre Längsachse unterbindenden Führungsmitteln (35) zusammenwirkt.

10. Anhängekupplung nach Anspruch 8 und 9, **dadurch gekennzeichnet, dass** das Halteelement (30) formschlüssig längs mindestens einer dem Verlauf der Kulisse (9) folgenden Führungsbahn (36a,36b) geführt ist.

11. Anhängekupplung nach einem der Ansprüche 1 bis 10, **dadurch gekennzeichnet, dass** die Welle (7) als Hohlwelle ausgebildet ist, die zentral integriert mit einer axial wirkenden Verriegelung(43) des Kugelstangenlagerkopfes (4) zum in Eingriff bringen der Formschlusskonturen (14) sowohl in der Betriebslage als auch in der Ruhelage der Kugelstange (3) ausgebildet ist.

12. Anhängekupplung nach Anspruch 10, **dadurch gekennzeichnet, dass** die Verriegelung einen in der Hohlwelle (7) geführten, gegen ein anstehendes Kraftelement (49) über ein von außen betätigbares Druck- oder Zugmittel (42) zurückstellbaren Sperrbolzen (43) und mit diesem zusammenwirkende, in Radialbohrungen (47) der Hohlwelle (7) angeordnete, ein- und ausrückbare Rastmittel (48) umfasst.

13. Anhängekupplung nach einem der Ansprüche 1 bis 12, **dadurch gekennzeichnet, dass** die Bahnsteuerung(8) als Nut (22) mit einem in die Nut eingreifenden Folgemittel (23) ausgebildet ist und dem Folgemittel (23) in der Ruhe - und Betriebslage des Kugelstangenlagerkopfes (4) Vertiefungen (24a,24b) des Nutgrundes (27) zugeordnet sind, in die die Folgemittel (23) eintauchen.

14. Anhängekupplung nach Anspruch 13, **dadurch gekennzeichnet, dass** die Nut (22) in dem sphärisch gewölbten Bereich (12) des Kugelstangelagerkopfs (4) und das Folgemittel (23) in der sphärisch gewölbten Oberfläche (10) des Anbauteils (5) angeordnet sind.

15. Anhängekupplung nach Anspruch 13, **dadurch gekennzeichnet, dass** das Folgemittel (23) in dem sphärisch gewölbten Bereich (12) des Kugelstangelagerkopfs (4) und die Nut (22) in der sphärisch gewölbten Oberfläche (10) des Anbauteils (5) angeordnet sind.

16. Anhängekupplung nach Anspruch 14 oder 15, **dadurch gekennzeichnet, dass** die die Nut (22) stirnseitig begrenzenden Vertiefungen (24a,24b) auf unterschiedlich großen konzentrischen Kreisen um die Welle (7) herum angeordnet sind.

17. Anhängekupplung nach einem der Ansprüche 1 bis 16, **dadurch gekennzeichnet, dass** die Formschlusskonturen in Vertiefungen (18, 61 A/R - 70 A/R) eingreifende Auswölbungen (17) umfassen.

18. Anhängekupplung nach Anspruch 17, **dadurch gekennzeichnet, dass** auf zwei versetzt zueinander angeordneten Kreislinien (19,20) für die Arbeitslage und die Ruhelage jeweils der Zahl der Auswölbungen (17) entsprechend Vertiefungen (18) angeordnet sind.

19. Anhängekupplung nach Anspruch 17, **dadurch gekennzeichnet, dass** sämtliche Vertiefungen (61 A/R - 70 A/R) auf einer einzigen ringförmigen Linie sowohl für die Arbeitslage (A) als auch die Ruhelage (R) liegen, wobei die Zahl der Vertiefungen (61 A/R - 70 A/R) um mindestens eins größer als die Zahl der Auswölbungen (17) ist, in der Arbeitslage (A) eine erste Vertiefung (64 R) und in der Ruhelage (R) eine zweite Vertiefung (61 A) ungenutzt bleiben und die erste und zweite Vertiefung sich an unterschiedlichen Positionen der ringförmigen Linie befinden.

## Claims

1. A trailer coupling for motor vehicles, comprising a ball head mounted pivotably and axially displaceably by means of a track control, disposed fixedly on the vehicle, which bears a coupling ball at its free end and both in its rest position and its operating position can be fixed in a torque-proof manner by means of positive contours on the one hand of a ball neck bearing head configured to be spherical at least in certain sections and on the other hand of a spherically curved attachment part located opposite this spherical region, which can be brought into engagement, wherein the ball neck bearing head is disposed on a tumbling bearing having a track control for the ball neck bearing head, which effects movements about a spatially varying pivot axis during pivoting of the ball head from one into the other end position, **characterised in that** the tumbling bearing has a shaft (7) on which the ball neck bearing head (4) is mounted pivotably and axially displaceably and the shaft (7) is guided displaceably in a link (9) of the curved attachment part (5), wherein the track control (8) for the ball neck bearing head (4) effects the displacement of the shaft (7) in the link (9) during pivoting of the ball head (3) from the one into the other end position.

2. The trailer coupling according to claim 1, **characterised in that** the spherically curved surface (10) of the attachment part (5) and the spherically curved region (12) of the ball neck bearing head (4) resting on this surface in the rotary end positions are configured to be convex.

3. The trailer coupling according to claim 1, **characterised in that** the spherically curved surface (10) of the attachment part (5) is configured to be convex and the spherically curved region (12) of the ball neck bearing head (4) resting on this surface in the rotary end positions is configured to be concave.

4. The trailer coupling according to any one of claims 1 to 3, **characterised in that** the centre point of the spherically curved surface (10) of the attachment part (5) lies outside the space occupied by the ball neck bearing head (4) and the centre point of the spherically curved region (12) of the ball neck bearing head (4) lies outside the space occupied by the attachment part (5).

5. The trailer coupling according to claim 4, **characterised in that** the centre point of the spherically curved surface (10) of the attachment part (5) and the centre point of the spherically curved region (12) of the ball neck bearing head (4) lies outside the space occupied by the trailer coupling (1).

6. The trailer coupling according to any one of claims 1 to 5, **characterised in that** the spherically curved region (12) of the ball neck bearing head (4) has the shape of a spherical ball (13).

7. The trailer coupling according to claim 6, **characterised in that** the spherically curved surface (10) of the attachment part (5) is greater than the spherical ball (13).

8. The trailer coupling according to any one of claims 1 to 7, **characterised in that** the shaft (7) on the back (28) of the attachment part (5) opposite the ball neck bearing head (4) is connected in a torque-proof manner to a retaining part (30) resting on the rear side.

9. The trailer coupling according to claim 8, **characterised in that** the retaining part (30) cooperates with guide means (35) disposed on the attachment part (5) which prevent any rotation of the shaft (7) about its longitudinal axis.

10. The trailer coupling according to claim 8 and 9, **characterised in that** the retaining element (30) is guided positively along at least one guide track (36a, 36b) following the course of the link (9).

11. The trailer coupling according to any one of claims 1 to 10, **characterised in that** the shaft (7) is configured as a hollow shaft which is integrated centrally with an axially acting lock (43) of the ball neck bearing head (4) for bringing the positive contours (14) into engagement both in the operating position and in the rest position of the ball head (3).

12. The trailer coupling according to claim 10, **characterised in that** the lock comprises a locking pin (43) guided in the hollow shaft (7), which can be reset against a pending force element (49) by means of an externally actuatable compression or tension means (42) and latching means (48) which cooperate with said locking pin, which are located in radial holes (47) of the hollow shaft (7), and which can be moved in and out.

13. The trailer coupling according to any one of claims 1 to 12, **characterised in that** the track control (8) is configured as a groove (22) with a following means (23) engaging in the groove and the following means (23) are assigned indentations (24a, 24b) of the groove base (27) in the rest and operating position of the ball neck bearing head (4), in which the following means (23) engage.

14. The trailer coupling according to claim 13, **characterised in that** the groove (22) is disposed in the spherically curved region (12) of the ball neck bearing head (4) and the following means (23) is disposed in the spherically curved surface (10) of the attachment part (5).

15. The trailer coupling according to claim 13, **characterised in that** the following means (23) are disposed in the spherically curved region (12) of the ball neck bearing head (4) and the groove (22) is disposed in the spherically curved surface (10) of the attachment part (5).

16. The trailer coupling according to claim 14 or 15, **characterised in that** the indentations (24a, 24b) delimiting the groove (22) at the front are disposed around the shaft (7) on different-sized concentric circles.

17. The trailer coupling according to any one of claims 1 to 16, **characterised in that** the positive contours comprise protuberances (17) engaging in indentations (18, 61 A/R - 70 A/R).

18. The trailer coupling according to claim 17, **characterised in that** indentations (18) are disposed on two circumferences (19, 20) arranged offset with respect to one another for the working position and the rest position each corresponding to the number of protuberances (17).

19. The trailer coupling according to claim 17, **characterised in that** all the indentations (61 A/R - 70 A/R) lie on a single annular line both for the working position (A) and the rest position (R), wherein the number of the indentations (61 A/R - 70 A/R) is at least one greater than the number of the protuberances (17), in the working position (A) a first indentation (64 R) and in the rest position (R) a second indentation (61 A) remain unused and the first and second indentation are located at different positions on the annular line.

## Revendications

1. Attelage de remorque pour véhicules automobiles, comprenant une barre d'accouplement, disposée de façon solidaire du véhicule, pouvant basculer au moyen d'une commande de trajectoire et montée de façon à pouvoir coulisser axialement, qui porte une boule d'attelage sur son extrémité libre et peut être fixée de façon solidaire en rotation aussi bien dans sa position de repos que dans sa position de service au moyen de contours à complémentarité de formes pouvant être mis en prise d'une part d'une tête de palier de barre d'attelage conçue de façon sphérique au moins par endroits et d'autre part d'une partie rapportée incurvée de façon sphérique et faisant face à cette zone sphérique, la tête de palier de barre d'attelage étant disposée sur un palier oscillant avec une commande de trajectoire de la tête de palier de barre d'attelage, lequel palier entraîne, lors du basculement de la barre d'attelage d'une position extrême dans l'autre position extrême, des mouvements autour d'un axe de basculement variant dans l'espace, **caractérisé en ce que** le palier oscillant présente un arbre (7) sur lequel la tête de palier de barre d'attelage (4) est montée de façon basculante et coulissante axialement et l'arbre (7) est guidé de façon coulissante dans une coulisse (9) de la partie rapportée (5) incurvée, la commande de trajectoire (8) de la tête de palier de barre d'attelage (4) entrainant, lors du basculement de la barre d'attelage (3) d'une position extrême dans l'autre position extrême, le déplacement de l'arbre (7) dans la coulisse (9).

2. Attelage de remorque selon la revendication 1, **caractérisé en ce que** la surface (10) incurvée sphérique de la partie rapportée (5) est conçue concave et la zone (12) incurvée, sphérique, s'appliquant dans les positions extrêmes de rotation sur cette surface, de la tête de palier de barre d'attelage (4) est conçue convexe.

3. Attelage de remorque selon la revendication 1, **caractérisé en ce que** la surface (10) incurvée sphérique de la partie rapportée (5) est conçue convexe et la zone incurvée (12) sphérique, s'appliquant dans les positions extrêmes de rotation sur cette surface, de la tête de palier de barre d'attelage (4) est conçue concave.

4. Attelage de remorque selon l'une des revendications 1 à 3, **caractérisé en ce que** le centre de la surface (10), incurvée de façon sphérique, de la partie rapportée (5) se situe en dehors de l'espace occupé par la tête de palier de barre d'attelage (4) et le centre de la zone (12), incurvée de façon sphérique, de la tête de palier de barre d'attelage (4) se situe à l'extérieur de l'espace occupée par la partie rapportée (5).

5. Attelage de remorque selon la revendication 4, **caractérisé en ce que** le centre de la surface (10), incurvée de façon sphérique, de la partie rapportée (5) et le centre de la zone (12), incurvée de façon sphérique, de la tête de palier de barre d'attelage (4) se situe à l'extérieur de l'espace occupé par l'attelage de remorque (1).

6. Attelage de remorque selon l'une des revendications 1 à 5, **caractérisé en ce que** la zone (12), incurvée de façon sphérique, de la tête de palier de barre d'attelage (4) présente la forme d'une calotte sphérique (13).

7. Attelage de remorque selon la revendication 6, **caractérisé en ce que** la surface (10), incurvée de façon sphérique, de la partie rapportée (5) est plus grande que la calotte sphérique (13).

8. Attelage de remorque selon l'une des revendications 1 à 7, **caractérisé en ce que** l'arbre (7) sur le côté arrière (28), faisant face à la tête de palier de barre d'attelage (4), de la partie rapportée (5) est relié de façon solidaire en rotation à une partie de retenue (30) s'appliquant sur l'arrière.

9. Attelage de remorque selon la revendication 8, **caractérisé en ce que** la partie de retenue (30) coopère avec des moyens de guidage (35) disposés sur la partie rapportée (5), interdisant une rotation de l'arbre (7) autour de son axe longitudinal.

10. Attelage de remorque selon les revendications 8 ou 9, **caractérisé en ce que** l'élément de retenue (30) est guidé par complémentarité de formes le long d'au moins une trajectoire de guidage (36a, 36b) qui suit le tracé de la coulisse (9).

11. Attelage de remorque selon l'une des revendications 1 à 10, **caractérisé en ce que** l'arbre (7) est conçu comme arbre creux, qui est intégré de façon centrale avec un verrouillage (43) agissant de façon axiale de la tête de palier de barre d'attelage (4) pour amener en prise les contours à complémentarité de formes (14) aussi bien dans la position de service que dans la position de repos de la barre d'attelage (3).

12. Attelage de remorque selon la revendication 10, **caractérisé en ce que** le verrouillage comprend un boulon de blocage (43) guidé dans l'arbre creux (7) pouvant être reculé vers un élément de force (49) contigu par l'intermédiaire d'un moyen de pression ou de traction (42) pouvant être actionné par l'extérieur et comprend des moyens d'encliquetage (48) en coopérant avec ce boulon, disposés dans des alésages radiaux (47) de l'arbre creux (7), pouvant être encliquetés et désencliquetés.

13. Attelage de remorque selon l'une des revendications 1 à 12, **caractérisé en ce que** la commande de trajectoire (8) est conçue comme rainure (22) avec un moyen séquentiel (23) s'engageant dans la rainure et des cavités (24a, 24b) du fond de rainure (27) sont attribuées au moyen séquentiel (23) dans la position de repos et de service de la tête de palier de barre d'attelage (4), cavités dans lesquelles les moyens séquentiels (23) plongent.

14. Attelage de remorque selon la revendication 13, **caractérisé en ce que** la rainure (22) et le moyen séquentiel (23) sont disposés respectivement dans la zone (12) incurvée de façon sphérique de la tête de palier de barre d'attelage (4) et dans la surface (10) incurvée de façon sphérique de la partie rapportée (5).

15. Attelage de remorque selon la revendication 13, **caractérisé en ce que** le moyen séquentiel (23) et la rainure (22) sont disposés respectivement dans la zone (12), incurvée de façon sphérique, de la tête de palier de barre d'attelage (4) et dans la surface (10) incurvée de façon sphérique, de la partie rapportée (5).

16. Attelage de remorque selon la revendication 14 ou 15, **caractérisé en ce que** les cavités (24a, 24b) délimitant la rainure (22) côté avant sont disposées sur des cercles concentriques de grandeurs différentes autour de l'arbre (7).

17. Attelage de remorque selon l'une des revendications 1 à 16, **caractérisé en ce que** les contours de complémentarité de formes comprennent des excroissances (17) s'engageant dans des cavités (18, 61 A/R - 70 A/R).

18. Attelage de remorque selon la revendication 17, **caractérisé en ce que** des cavités (18) sont disposées sur deux lignes de cercle (19, 20) disposées de façon décalée l'une par rapport à l'autre pour la position de travail et la position de repos à chaque fois en fonction du nombre des excroissances (17).

19. Attelage de remorque selon la revendication 17, **caractérisé en ce que** toutes les cavités (61A/R - 70 A/R) reposent sur une unique ligne de forme annulaire aussi bien pour la position de travail (A) que pour la position de repos (R), le nombre des cavités (61 A/R - 70 A/R) étant supérieur d'au moins un au nombre des excroissances (17), une première cavité (64 R) reste non utilisée dans la position de travail (A) et une seconde cavité (61 A) reste non utilisée dans la position de repos (R) et la première et la seconde cavités se trouvant sur différentes positions de la ligne de forme annulaire.
